# EUROPÄISCHE PATENTANMELDUNG

(11) **EP 2 384 873 A1**
(43) Veröffentlichungstag der Anmeldung: **09.11.2011**
(21) Anmeldenummer: 11003516.9
(22) Anmeldetag: 29.04.2011
(51) Int. Cl.: B29B 17/02, B01D 11/02, C08J 11/08

(54) **Verfahren und Anlage zur Rückgewinnung von Kunststoff-Recyclaten aus zerkleinerten Kunststoffabfällen**

(30) Priorität: 08.05.2010 DE 102010019824
(71) Anmelder: Nitsche, Manfred Dr., 21247 Hamburg (DE); Lorenz, Arnulf, 01169 Dresden (DE)
(72) Erfinder: Nitsche, Manfred Dr., 21247 Hamburg (DE); Lorenz, Arnulf, 01169 Dresden (DE)
(74) Vertreter: Thomas, Götz

(57) **Zusammenfassung**

Die Erfindung betrifft ein Verfahren und eine Anlage zur Rückgewinnung von Kunststoff-Recyclaten aus zerkleinerten Kunststoffabfällen, die Polyolefine und Polyethylenterephthalat enthalten. Um es zu ermöglichen, hochwertige Recyclate herzustellen, die geruchsneutral sind und eine vergleichbare Qualität wie neuwertige Kunststoffe besitzen, wird erfindungsgemäß vorgeschlagen, dass die Kunststoffabfälle vor einer Trennung in sortenreine Kunststoff-Recyclate mit einem organischen Lösemittel behandelt werden.

## Beschreibung

Die Erfindung betrifft ein Verfahren und eine Anlage zur Rückgewinnung von Kunststoff-Recyclaten aus zerkleinerten Kunststoffabfällen aus Haushalten und Gewerbe, womit sich Kunststoffabfälle, die hauptsächlich aus Polyolefinen und Polyethylenterephthalat bestehen, zu hochwertigen sortenreinen Recyclaten aufbereiten lassen, die eine vergleichbare Qualität wie neuwertige Kunststoffe besitzen.

Kunststoffabfälle aus Haushalten und Gewerbe, wie sie zum Beispiel in Deutschland durch das duale System eingesammelt werden, enthalten überwiegend Verpackungsabfälle, wie flexible Leichtverpackungen (LVP) sowie blasgeformte und tiefgezogene Leichtverpackungen aus verschiedenen Kunststoffen, unter denen jedoch Polyolefine, wie Polyethylen hoher Dichte (HDPE), Polyethylen niedriger Dichte (LDPE), Polypropylen (PP) und Polyethylenterephthalat (PET) überwiegen.

Als flexible Leichtverpackungen (LVP) werden alle Arten von Kunststofffolien sowie daraus hergestellte Gegenstände, wie zum Beispiel Tragetaschen oder Umverpackungen aus dem Hygiene- und Nahrungsmittelbereich bezeichnet, während die Bezeichnung blasgeformte und tiefgezogene Leichtverpackungen zum einen für Hohlkörper aus Kunststoff, wie zum Beispiel Behälter für Wasch-und Reinigungs- oder Körperpflegemittel und Getränkeflaschen, sowie zum anderen für tiefgezogene Becher oder Schalen, wie zum Beispiel Becher für Joghurt, Quark, Sahne oder andere Nahrungsmittel, verwendet wird.

Die Verwertung derartiger Kunststoffabfälle kann durch eine energetische Nutzung unter Verbrennung der Kunststoffabfälle, eine rohstoffliche Nutzung unter Vergasung oder Zersetzung der Kunststoffabfälle, oder eine werkstoffliche Nutzung durch sortenreine Trennung und Wiederverwertung erfolgen, wobei die zuletzt genannte Art der Verwertung unter ökologischen Aspekten und unter dem Aspekt der Ressourcenschonung bevorzugt wird.

Zur werkstofflichen Verwertung von Kunststoffabfällen aus Haushalten und Gewerbe sind bereits eine ganze Reihe von Verfahren und Anlagen vorgeschlagen worden. In der Praxis werden die Kunststoffabfälle allerdings zumeist nur zerkleinert, gewaschen, durch physikalische Trennverfahren getrennt, getrocknet und dann granuliert. Die dabei produzierten Kunststoff-Recyclaten besitzen häufig eine undefinierbare Farbe, einen sehr unangenehmen Geruch, sowie schlechte physikalisch-mechanische Kennwerte und somit eine deutlich geringere Qualität als vergleichbare neuwertige Kunststoffe. Ein Einsatz dieser Recyclate ist daher zumeist nur in der Landwirtschaft, im Wasser- und Straßenbau, sowie für den Garten- und Parkbereich möglich.

Die an sich erwünschte werkstoffliche Verwertung wird dabei nicht nur durch die höheren Kosten einer sortenreinen Trennung der Kunststoffabfälle erschwert, sondern auch dadurch, dass sich mit bekannten Aufbereitungsverfahren nur verhältnismäßig lose an den Oberflächen der Kunststoffabfälle anhaftende Verunreinigungen entfernen lassen, wie zum Beispiel Anbackungen ehemaliger Behälterinhalte, während fest an den Oberflächen der Kunststoffabfälle haftende Verunreinigungen, wie aufgeklebte Kunststoff- und Papieretiketten, Reste von Siegelfolien aus Aluminium oder mit Aluminium beschichteten Kunststoffen, Klebstoffreste und/oder Druckfarben nicht oder nur sehr unvollständig entfernt werden können. Weiter eignen sich die bekannten Aufbereitungsverfahren auch nicht dazu, Kontaminate, wie zum Beispiel Geruchsstoffe, andere geruchsintensive Substanzen oder niedermolekulare Abbau- und Reaktionsprodukte zu entfernen, die während des Gebrauchs der Kunststoffe oder nach deren Entsorgung durch Diffusion in die Kunststoffmatrix eingedrungen sind. Sowohl die ersteren, d.h. die an den Kunststoffabfällen anhaftenden Verunreinigungen, als auch die letzteren, d.h. die in die Kunststoffmatrix diffundierten Substanzen, verhindern in vielen Fällen eine Verwendung der aufbereiteten Kunststoffabfälle als Substitut für neuwertige Kunststoffe.

Ausgehend hiervon liegt der Erfindung die Aufgabe zugrunde, ein Verfahren und eine Anlage der eingangs genannten Art zu verbessern, so dass sie sich zur Erzeugung hochwertiger sortenreiner Kunststoff-Recyclate eignen, die geruchsneutral sind und eine vergleichbare Qualität wie neuwertige Kunststoffe besitzen.

Diese Aufgabe wird bei dem erfindungsgemäßen Verfahren dadurch gelöst, dass die unsortierten zerkleinerten Kunststoffabfälle vor einer Trennung in sortenreine Kunststoff-Recyclate mit einem organischen Lösemittel behandelt werden.

Der Erfindung liegt der Gedanke zugrunde, mit dem organischen Lösemittel nicht nur die äußerlich an den Kunststoffabfällen anhaftenden Verunreinigungen, sondern auch in die Matrix der Kunststoffe eindiffundierte Geruchsstoffe und Verunreinigungen zu entfernen, wobei Kunststoffabfälle aus Polyolefinen, wie Polyethylen und Polypropylen, Polyethylenterephthalat und gegebenenfalls auch Beimengungen von Polystyrol gemeinsam der Behandlung mit dem organischen Lösemittel unterzogen und erst danach in sortenreine Kunststoff-Recyclate getrennt werden. Dadurch kann Aufwand für die Trennung beträchtlich verringert werden. Zu Vermeidung einer Explosionsgefahr erfolgt die Behandlung in einer Atmosphäre unter Sauerstoffabschluss oder mit reduziertem Sauerstoffgehalt.

Vorzugsweise wird ein von Wasser und Fluorkohlenwasserstoffen freies organisches aliphatisches Lösemittel verwendet, das keine schädlichen aromatischen Kohlenwasserstoffe enthält und zumindest gegenüber Polyolefinen und Polyethylentherephthalat chemisch inert ist, wobei es vorzugsweise die folgenden weiteren Kriterien erfüllt:
- Reinigt, extrahiert und dekontaminiert gleichermaßen gut
- Geringer Energiebedarf für seine Wiederaufbereitung
- Für die Kreislaufführung einfach und gut aufzubereiten

Als ein für das erfindungsgemäße Verfahren besonders gut geeignetes Lösemittel hat sich das Alkan n-Hexan erwiesen. Jedoch konnten auch mit einigen Alkoholen und mit einigen Essigsäureestern, welche durch in den Kunststoffabfällen vorhandene Verunreinigungen und insbesondere durch saure oder alkalische Verunreinigungen, wie Essigsäure bzw. Tenside oder Waschmittelrückstände, nicht hydrolysierbar sind, gute Ergebnisse erzielt werden, wie zum Beispiel mit den Alkoholen Iso-Propanol oder n-Butanol bzw. den Essigsäureestern Iso-Propylacetat oder n-Butylacetat.

Gemäß einer bevorzugten Ausgestaltung der Erfindung erfolgt nach der Behandlung mit einem der genannten Lösemittel eine Desolventierung, d.h. eine mechanische und/oder thermische Trennung der Kunststoffabfälle vom Lösemittel, bei der die letzteren zweckmäßig durch Zentrifugalkräfte und/oder durch Erhitzung in einem Trockner wieder vom Lösemittel befreit werden. Dadurch erhält man ein geruchsneutrales Misch-Recyclat, das eine vergleichbare Qualität wie ein Gemisch neuwertiger Kunststoffe besitzt. Dieses Produkt kann anschließend unter Verwendung von an sich bekannten Verfahren zuerst von unerwünschten Begleitstoffen gereinigt und dann in sortenreine Kunststoff-Recyclate getrennt werden. Die sortenreinen Kunststoff-Recyclate können bei Bedarf einer weiteren Nachbehandlung unterzogen werden, wie zum Beispiel einer Trennung in weiße oder farblose bzw. farbige Recyclate und/oder im Fall von PET einer Nachkondensation.

Um während der Behandlung mit dem Lösemittel zugleich für eine mechanische Einwirkung auf die zerkleinerten Kunststoffabfälle zu sorgen, sieht eine bevorzugte Ausgestaltung der Erfindung vor, dass die unsortierten Kunststoffabfälle mit unter Druck stehendem erwärmtem Lösemittel besprüht werden.

Das Besprühen der Kunststoffabfälle mit unter Druck stehendem erwärmtem Lösemittel erfolgt bevorzugt während eines ersten Behandlungsschritts zur Vorreinigung der Oberflächen der Kunststoffabfälle, der vorteilhaft in einer Förderschnecke durchgeführt wird, in der die Kunststoffabfälle im Gegenstrom mit dem unter Druck stehenden erwärmten Lösemittel besprüht werden.

Zur Beschickung der Förderschnecke mit den Kunststoffabfällen dient zweckmäßig eine gasdichte Zellenradschleuse, in der auch der zwischen den Kunststoffabfällen mitgeführte Luftsauerstoff durch ein Inertgas, vorzugsweise Stickstoff, verdrängt wird, so dass die nachfolgende Behandlung mit dem Lösemittel in einer Atmosphäre mit reduziertem Sauerstoffgehalt erfolgen kann, um die Bildung eines explosiven Sauerstoff-Lösemittel-Gemischs zu verhindern.

Neben der Zellenradschleuse weist die Förderschnecke am unteren Ende vorteilhaft ein Bodensieb auf, durch welches das entlang der Förderschnecke auf die Kunststoffabfälle aufgesprühte Lösemittel zusammen mit den in der Förderschnecke von den Kunststoffabfällen abgelösten Verunreinigungen abfließen kann, so dass die Kunststoffabfälle während des Transports durch die Förderschnecke nicht im Lösemittel untergetaucht sind. Dadurch wird sichergestellt, dass verunreinigtes Lösemittel abfließt und die Kunststoffabfälle nur kurzzeitig mit verunreinigtem Lösemittel in Kontakt treten können, um während der Behandlung eine Verfärbung von weißen oder farblosen Kunststoffen zu verhindern. Durch das Besprühen der Kunststoffabfälle mit dem unter Druck stehenden Lösemittel in der Förderschnecke können während der Verweilzeit in derselben nicht nur äußerlich anhaftende Verunreinigungen, insbesondere fettige und ölige Verunreinigungen, von den Kunststoffabfällen optimal abgelöst werden, sondern gleichzeitig auch das Ablösen von aufgeklebten Etiketten oder dergleichen, das Herauslösen von unerwünschten extrahierbaren Kontaminaten sowie die Eliminierung insbesondere von leichtflüchtigen Geruchsstoffen in Gang gesetzt werden. Das verschmutzte Lösemittel wird über einen Lagertank der thermischen Aufbereitung zugeführt.

Während eines anschließenden zweiten Behandlungsschritts werden mit Hilfe desselben Lösemittels Geruchsstoffe und andere Verunreinigungen aus der Kunststoffmatrix der Kunststoffabfälle extrahiert. Diese Extraktion erfolgt vorzugsweise in einem Mehrkammer-Karussell-Extrakteur, in dem Schüttungen der der unsortierten Kunststoffabfälle mit erwärmtem Lösemittel gespült werden, jedoch ohne dass die Kunststoffabfälle im Lösemittel untergetaucht oder suspendiert werden.

Der Mehrkammer-Karussell-Extrakteur umfasst bevorzugt einen zylindrischen, geschlossenen Behälter, in dem sich ein Rotor mit mehreren, vorzugsweise gasdicht voneinander getrennten separaten Kammern kontinuierlich oder intermittierend dreht. Die Kammern dienen jeweils zur Aufnahme von einer Schüttung der Kunststoffabfälle und weisen abklappbare Siebböden auf, um das Entleeren der Kammern zu erleichtern. Unterhalb der einzelnen Rotorkammern befindet sich jeweils ein Pumpensumpf, aus dem Lösemittel zeitgesteuert mittels einer Pumpe zur Oberseite der Schüttung in der darüber befindlichen Kammer gefördert werden kann, wo es gleichmäßig über den Kammerquerschnitt verteilt wird, bevorzugt mit Hilfe von Sprühlanzen. Das Lösemittel durchströmt die Schüttung mit einem definierten Volumenstrom von oben nach unten, wobei die Kunststoffabfälle zu keinem Zeitpunkt in verunreinigtem Lösemittel untergetaucht sind, um eine Rückverfärbung der Kunststoffe zu vermeiden. Das Maß der Extraktion kann gemäß den Erfordernissen durch die Verweilzeit der Kunststoffabfälle in jeder Kammer variiert werden, die weniger als 180 Minuten beträgt. Die Extraktionstemperatur liegt zweckmäßig zwischen 50°C und 70°C und kann mit Hilfe von Wärmetauschern eingestellt werden. Oberhalb der Schüttungen befindet sich jeweils ein abgeschlossener Brüdenraum, aus dem verdampftes, mit Geruchsstoffen belastetes Lösemittel durch Anlegen eines Unterdrucks abgezogen werden kann, um eine Verschleppung in die nachfolgende Kammer des Mehrkammer-Karussell-Extrakteurs zu vermeiden. Das verbrauchte, mit Verunreinigungen belastete Lösemittel aus dem zweiten Behandlungsschritt im Mehrkammer-Karussell-Extrakteur wird im Gegenstrom in die Förderschnecke zurückgeführt, um das Lösemittel dort zur Vorreinigung der Kunststoffabfälle zu nutzen.

Bei dem zweiten Behandlungsschritt werden die Oberflächen der zerkleinerten Kunststoffabfälle von öligen und/oder fettigen Verunreinigungen sowie von nicht vernetzten Druckfarben befreit, während anhaftende Klebeetiketten abgelöst und der verwendete Kleber von den Kunststoffoberflächen entfernt wird. Zugleich werden jedoch auch wachsartig degradierte Polymere, d.h. niedermolekulare Anteile, migrationsfähige Additive sowie in den Kunststoff eindiffundierte Verunreinigungen aus dem Inneren der Kunststoffabfälle extrahiert. Während eines nachfolgenden dritten Behandlungsschritts werden die zweckmäßig von einer Förderschnecke aus dem Mehrkammer-Karussell-Extrakteur ausgetragenen Kunststoffabfälle in einen mit dem Lösemittel gefüllten Behälter zugeführt und im Inneren des Behälters in Bewegung versetzt, vorteilhaft mittels eines Rührers. Durch das Umrühren des Behälterinhalts reiben die Kunststoffabfälle aneinander, wodurch eventuell noch verbliebene oberflächliche Anhaftungen in kürzester Zeit beseitigt werden können. Die Temperatur des Lösemittels im Rührbehälter beträgt zweckmäßig ebenfalls zwischen 50°C und 70°C.

Bei dem dritten Behandlungsschritt werden eventuell noch locker anhaftende Etikettenreste, Reste von Aluminium-Verschlußfolien oder Deckeln vollständig von den in den Kunststoffabfällen enthaltenen Kunststoffen getrennt und eventuell verbliebene Klebstoffreste durch die Reibung von den Oberflächen gelöst.

Um die zerkleinerten Kunststoffabfälle mechanisch und thermisch wieder von dem Lösemittel zu trennen, wird das Gemisch aus den Kunststoffabfällen und dem Lösemittel zuerst einem mechanischen Abscheider, vorzugsweise einem Zentrifugalabscheider zugeführt, wo das Lösemittel durch Zentrifugalkräfte abgetrennt wird. Ein Teil des abgetrennten Lösemittels kann in den Rührbehälter zurück gepumpt werden, um es beim dritten Behandlungsschritt erneut einzusetzen, während der Rest des Lösemittels einer Aufbereitung unterzogen wird.

Die noch mit restlichem Lösemittel versetzten Kunststoffabfälle werden dann aus dem mechanischen Abscheider ausgetragen und bis zu einer anschließenden thermischen Desolventierung in einem als Trocknervorlage dienenden Lagerbehälter zwischengelagert. In dem Lagerbehälter kann zweckmäßig bereits ein Teil des Lösemittels thermisch von den Kunststoffabfällen getrennt werden, indem diese innerhalb des Lagerbehälters mit heißem Inertgas gespült werden. Dadurch werden die Kunststoffabfälle aufgeheizt und mittels des Inertgases oberflächlich anhaftendes Lösemittel abgetrieben. Das abgetriebene Lösemittel wird zweckmäßig zusammen mit dem Inertgas durch einen Kondensator geleitet, um es zu verflüssigen und in den Kreislauf zurückzuführen.

Die teilweise vom Lösemittel befreiten Kunststoffabfälle werden bevorzugt einer thermischen Trocknung unter einem Unterdruck unterzogen, um das restliche Lösemittel abzutrennen. Dieser Vorgang erfolgt bevorzugt in einem Vakuumtrockner, wo das Lösemittel zusammen mit etwaigen, in den Kunststoffen verbliebenen Geruchsstoffen zuerst von den Oberflächen der Kunststoffabfälle verdampft und dann auch aus dem Inneren der Kunststoffabfälle ausgetrieben wird. Dazu werden einerseits die Kunststoffabfälle unter ständiger Bewegung bis auf eine Temperatur von etwa 115 bis 120°C, d.h. nahe der Glastemperatur der Polyolefine, erwärmt und andererseits einem Druck von weniger als 30 mbar ausgesetzt.

Um den Lösemittel-Partialdruck im Inneren des Trockners bzw. die Lösemittel-Gleichgewichtskonzentration an der Grenzfläche zwischen den Kunststoffabfällen und der Atmosphäre im Inneren des Trockners so niedrig wie möglich zu halten, wird dabei das ab- bzw. ausdampfende Lösemittel stetig abgezogen, indem ein Brüdenraum oberhalb der Kunststoffabfälle mit einem Unterdruck beaufschlagt und dabei bevorzugt mit einem heißen Inertgasstrom als Schleppgas gespült wird, um die Konzentration des Lösemittels im Brüdenraum zu verringern.

Eine Trocknung mit anderen Trocknerbauarten, wie Mischtrockner, Helixtrockner, Schaufeltrockner, Tellertrockner, Rotortrockner oder Trommeltrockner ist ebenfalls möglich, wenn der Trockner die auch an den Vakuumtrockner gestellten folgenden Anforderungen erfüllt:
- gleichmäßiger Produkttransport ohne Quervermischung zum Erreichen maximaler homogener Produktqualitäten
- exakt einstellbare Verweilzeit
- Halten einer optimalen Betriebstemperatur, zum Beispiel durch doppelwandiges beheizbares Trocknergehäuse und Umwälz-oder Fördermittel zum Ausschluss von Produktüberhitzung
- definierte Steuerung oder Regelung des Vakuums im Bereich < 20 mbar
- definierte Steuerung oder Regelung des Inertgasstroms
- Kreislaufführung des Inertgasstroms mit Kondensation des Lösemittels
- kontinuierliche Produktumlagerung zur Erhöhung des Wärme und Stoffübergangs
- große Produktoberflächen zur optimalen Abführung der Brüden.

Wenn die Kunststoffabfälle vorzugsweise nach einer Verweilzeit von etwa 220 bis 260 Minuten aus dem Vakuumtrockner abgezogen werden, sind sie bei einem Rest-Lösemittelgehalt von weniger als 10 ppm/kg praktisch lösemittelfrei und zudem vollständig geruchsneutral. Neben den zerkleinerten Kunststoffen enthalten die behandelten Kunststoffabfälle jedoch noch Begleitstoffe, wie Etikettenreste, Reste von Aluminium-Verschlussfolien und/oder Deckeln, sowie Feingut in Form von Kunststoff-Kleinstteilen und Abrieb, die bevorzugt vor der Trennung in sortenreine Kunststoff-Recyclate abgetrennt werden.

Das Feingut wird zweckmäßig bei einer auf die Desolventierung folgenden mechanischen Klassierung abgetrennt, vorzugsweise mit Hilfe von Sieben, und nachfolgend bevorzugt einer ein- oder zweistufigen Windsichtung unterzogen, die zur Abtrennung von flächigen Begleitstoffen, wie dünnen Folien oder Klebeetiketten dient. Durch die vorangehende Siebung kann die Trennschärfe bei der Windsichtung verbessert werden. Bei einer zweistufigen Sichtung kann als zweite Sichterstufe auch ein ballistischer Sichter eingesetzt werden, der durch den Windsichter der ersten Sichterstufe erheblich entlastet wird.

Die weitere Aufbereitung der Kunststoffabfälle erfolgt bevorzugt mittels eines Wirbelstromabscheiders, in dem Reste von Aluminium-Verschlussfolien und/oder Deckeln von den Kunststoffabfällen getrennt werden, so dass innerlich und äußerlich gereinigte gemischte Kunststoff-Recyclate zurückbleiben.

Diese lassen sich dann durch bekannte Sortierverfahren mit hohem Wirkungsgrad in sortenreine Kunststoff-Recyclate trennen, wobei vorzugsweise vollautomatisch arbeitende Sortieranlagen auf der Basis von Nah-Infrarot-Detektoren (NIR) und rechnergesteuerten Druckluftdüsen eingesetzt werden, die eine saubere Trennung der Kunststoffabfälle in Polyolefine einerseits und Polyethylenterephthalat andererseits gestatten.

Während die Polyolefin-Recyclate vorteilhaft einer anschließenden Farbseparation zugeführt werden, bei der mittels hochauflösender CCD-Kameras farblich gemischte Materialströme in farblich hochreine Materialfraktionen getrennt werden, wird das Polyethylenterephthalat-Recyclat vorteilhaft noch einer Nachkondensation unterzogen, um einen Sekundärrohstoff mit vergleichbaren Eigenschaften wie neues PET zu erhalten.

Bei der Nachkondensation der PET-Recyclate werden diese in einen Reaktor gefördert, wo unter ständiger Umwälzung bei einer Temperatur von 190 bis 210°C, einem Druck von weniger als 10 mbar und einer Verweilzeit von etwa 60 Minuten eine gewünschte intrinsische Viskosität sowie ein gewünschter Acetaldehydgehalt eingestellt werden.

Nach dem Austritt aus dem Reaktor kann ebenfalls noch eine Farbseparation erfolgen, wie zuvor bei den Polyolefin-Recyclaten beschrieben.

Im Folgenden wird die Erfindung anhand eines in der Zeichnung dargestellten Ausführungsbeispiels näher erläutert.
Fig. 1 zeigt eine schematische Darstellung einer Anlage zur zur Rückgewinnung von sortenreinen geruchsneutralen Kunststoff-Recyclaten gemäß der Erfindung;
Fig. 2 zeigt ein Fließbild eines Verfahrens zur Rückgewinnung von sortenreinen geruchsneutralen Kunststoff-Recyclaten gemäß der Erfindung.

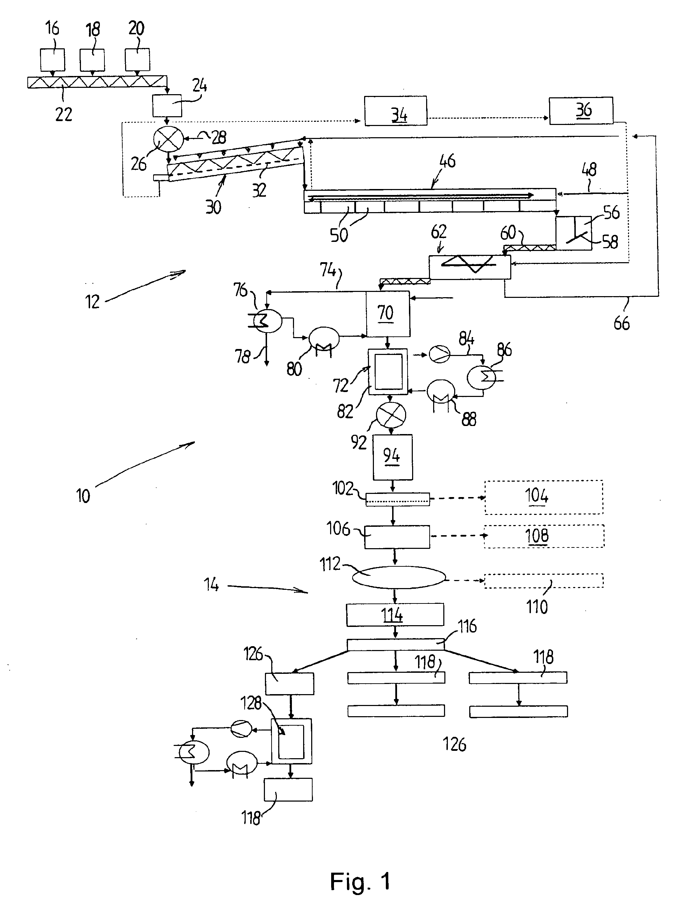

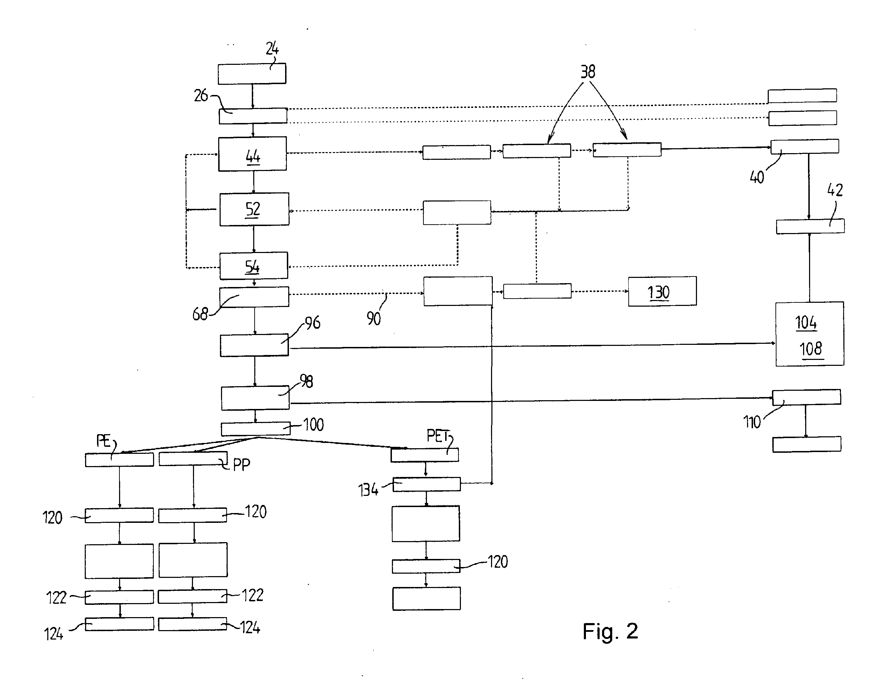

Die Anlage 10 in Fig. 1 und das Verfahren in Fig. 2 dienen zur Rückgewinnung von sortenreinen geruchsneutralen Kunststoff-Recyclaten aus Kunststoffabfällen von Haushalten und Gewerbe, die zum überwiegenden Teil aus Polyolefinen, wie Polyethylen hoher Dichte (HDPE), Polyethylen niedriger Dichte (LDPE) und Polypropylen (PP), sowie aus Polyethylenterephthalat (PET) bestehen. Zur Rückgewinnung der genannten Kunststoff-Recyclate werden die Kunststoffabfälle zuerst zerkleinert und dann in einem ersten geschlossenen Anlagenteil 12 gemeinsam einer Behandlung mit einem einzigen organischen Lösemittel und einer Abtrennung des Lösemittels (Desolventierung) unterzogen, bevor in einem zweiten offenen Anlagenteil 14 eine Trennung in die sortenreinen Kunststoffe-Recyclate erfolgt. Die beiden Anlagenteile 12, 14 sind voneinander unabhängig und können daher auch örtlich getrennt sein.

Vor der Behandlung mit dem organischen Lösemittel werden die Kunststoffabfälle ggf. nach einer Vorsortierung zur Gewinnung der zur Behandlung besonders gut geeigneten blasgeformten und tiefgezogenen Kunststoffverpackungen aus Polyethylen hoher Dichte (HDPE), Polyethylen niedriger Dichte (LDPE), Polypropylen (PP) und Polyethylenterephthalat (PET) sowie ggf. nach einer Wäsche und Trocknung in Schnitzel (Flakes) mit einer Kantenlänge von 20 bis 30 mm zerkleinert (nicht dargestellt).

Wie am besten in Fig. 1 dargestellt, werden die Schnitzel dann in Silos 16, 18, 20 zwischengelagert. Bevor die Anlage 10 aus den Silos 16, 18, 20 mit den Schnitzeln beschickt wird, wird der gesamte erste Anlagenteil 12 mit Stickstoff inertisiert und darin ein Sauerstoffgehalt eingestellt, der unter dem SKG-Wert von 9,3 Vol-% Sauerstoff in Stickstoff liegt. Während des Betriebs der Anlage wird im Anlagenteil 12 der Sauerstoffgehalt laufend überwacht und ein Stickstoff-Pendelgas-Überdruck von 10 bis 70 mbar eingestellt.

Im Betrieb der Anlage 10 werden die Schnitzel mittels einer Förderschnecke 22 aus den Silos 16, 18, 20 abgezogen, von denen zwei im Wechsel befüllt und entleert werden und eines als Reserve dient. Die Schnitzel werden von der Förderschnecke 22 massenstromgeregelt in einen Vorlagebehälter 24 für eine gasdichte Zellenradschleuse 26 gefördert, in der mittels eines definierten Stickstoffstroms 28 die Luft aus den Zwischenräumen zwischen den Schnitzeln verdrängt und in die Atmosphäre ausgetragen wird. Damit kann ein Eintrag von zusätzlichem Sauerstoff in den Anlagenteil 12 und damit im Anlagenteil 12 die Bildung eines explosionsfähigen Gasgemischs aus den Dämpfen des organischen Lösemittels und Sauerstoff verhindert werden. Bei dem organischen Lösemittel, das bei der Behandlung der gemischten Schnitzel aus LDPE, HDPE, PP und PET im Anlagenteil 12 eingesetzt wird, handelt es sich um ein einziges FCKW-freies aliphatische Lösungsmittel, vorzugsweise um n-Hexan. Jedoch sind auch Iso-Propanol oder n-Butanol geeignet, die wie n-Hexan gegenüber den behandelten Kunststoffen chemisch inert sind und durch alkalisch oder sauer reagierende Verunreinigungen oder Geruchsstoffe in den Kunststoffabfällen nicht hydrolysiert werden können.

Die aus der Zellenradschleuse 26 austretenden Schnitzel werden in einer schräg nach oben führenden Förderschnecke 30 im Gegenstrom mit einer definierten Menge des heißen Lösemittels druckbesprüht. Das verunreinigte Lösemittel kann durch ein Bodensieb 32 der Förderschnecke 30 kontinuierlich abfließen, um seinen Kontakt mit den Schnitzeln zu minimieren, und wird dann über einen Lagertank 34 einer Lösemittelaufbereitungseinheit 36 zugeführt. In der Lösemittelaufbereitungseinheit 36 wird das verunreinigte Lösemittel es durch Destillation mit einer Vorverdampfung und einer Nachverdampfung wiederaufbereitet, wie in Fig. 2 bei 38 dargestellt. Der von Lösemittel befreite Prozessrückstand 40 wird einer thermischen Verwertung zugeführt, wie in Fig. 2 bei 42 dargestellt.

In der Förderschnecke 30 werden die Schnitzel in einem ersten Behandlungsschritt einer Vorreinigung unterzogen, wie in Fig. 2 bei 44 dargestellt. Dabei werden äußerlich an den Schnitzeln anhaftende Verunreinigungen, insbesondere fettige und ölige Verunreinigungen abgelöst und mit dem Ablösen von Etiketten sowie der Extraktion von unerwünschten Verunreinigungen aus der Kunststoffmatrix der Schnitzel sowie dem Herauslösen leicht flüchtiger Geruchsstoffe begonnen. Der Grad der Ablösung bzw. Extraktion kann dabei durch den einstellbaren Sprühdruck des Lösemittels und die Drehzahl der Förderschnecke 30 bzw. die Verweilzeit der Schnitzel in der Förderschnecke 30 gesteuert werden.

Nach dem Verlassen der Förderschnecke 30 werden die Schnitzel in einem zweiten Behandlungsschritt in einem Mehrkammer-Karussell-Extrakteur 46 einer Intensivreinigung mit demselben organischen Lösemittel unterzogen, wozu ein Teil des Destillats aus der Lösemittelaufbereitungseinheit 36 in den Extrakteur 46 zugeführt wird, wie in Fig. 1 und 2 mit 48 dargestellt. Der Extrakteur 46 weist einen zylindrischen, geschlossenen Behälter auf, in dem sich ein Mehrkammerrotor mit mehreren voneinander getrennten Kammern 50 dreht, die jeweils zur Aufnahme einer Schüttung der Schnitzel dienen. Während der Drehung des Rotors wird eine unter dem Austrag der Förderschnecke 30 befindliche Kammer 50 des Rotors von oben mit einer Schüttung der Schnitzel befüllt, während die Schüttung in der vorangehenden Kammer nach dem Durchlaufen des Extrakteurs 46 durch einen abklappbaren Siebboden (nicht dargestellt) entleert wird. Der Antrieb des Rotors erfolgt kontinuierlich oder getaktet. Unterhalb der einzelnen Rotorkammern 50 bzw. von deren Siebböden befindet sich jeweils ein Pumpensumpf (nicht dargestellt), aus dem das Lösemittel mittels einer Pumpe (nicht dargestellt) gesteuert zur Oberseite der Schüttung gepumpt wird. Dort wird das Lösemittel mit Sprühlanzen (nicht dargestellt) verteilt, bevor es durch seine Schwerkraft mit einem definierten Volumenstrom nach unten durch die Schüttung fließt. Beim Durchtritt durch die Schüttung erfolgt eine extraktive Intensivreinigung der Schnitzel, bei der die Schnitzel zum einen von nicht vernetzten Druckfarben, öligen und fettigen Verunreinigungen sowie Klebeetiketten und Klebstoffen gereinigt werden. Zum anderen werden wachsartig degradierte Polymere, d.h. niedermolekulare Anteile, migrationsfähige Additive und in die Kunststoffmatrix eindiffundierte Verunreinigungen aus dem Inneren der Schnitzel herausgelöst, wie in Fig. 2 bei 52 dargestellt.

Die Verweilzeit der Schnitzel im Extrakteur 46 kann durch die Drehzahl des Rotors gesteuert werden. Die Extraktionstemperatur in den Kammern 50 kann durch Wärmetauscher (nicht dargestellt) eingestellt werden, durch die das Lösemittel vor der Zufuhr in den Extrakteur 46 geleitet wird. Die Verweilzeit der Schnitzel im Extrakteur bzw. die Gesamtextraktionszeit beträgt bei einer Extraktionstemperatur von 63 bis 65°C zwischen etwa 120 und 150 Minuten.

Die Kammern 50 des Extrakteurs 46 werden nicht vollständig mit den Schnitzeln gefüllt, so dass oberhalb der Schüttungen ein Brüdenraum (nicht dargestellt) bleibt, in dem sich verdampftes Lösemittel sammeln kann. Die Brüdenräume der einzelnen Kammern 50 sind voneinander getrennt und mit Unterdruck beaufschlagbar, um das verdampfte, mit Geruchsstoffen beladene Lösemittel kontinuierlich aus den Brüdenräumen der Kammern 50 abzuziehen und eine Verschleppung der Geruchsstoffe in einen nachfolgenden Prozessschritt zu vermeiden.

Beim Verlassen des Extrakteurs 46 sind die Schnitzel mit Lösemittel beladen, das an den Oberflächen anhaftet und zum Teil in die Polymermatrix eindiffundiert ist. Die Schnitzel sind darüber hinaus mit Begleitstoffen durchmischt, wie abgelösten Etikettenresten, Resten von Aluminium-Folien oder Deckeln, und enthalten eine Feinkornfraktion.

Nach dem Verlassen des Mehrkammer-Karussell-Extrakteurs 46 werden die Schnitzel in einem dritten Behandlungsschritt einer friktiven Nachreinigung unterzogen, wie in Fig. 2 bei 54 dargestellt. Die Nachreinigung erfolgt in einem mit Destillat aus der Lösemittelaufbereitungseinheit 36 gefüllten Rührbehälter 56, in dem im flüssigen Lösemittel suspendierten Schnitzel mit einem Rührer 58 in Bewegung versetzt werden, um eventuell noch vorhandene Anhaftungen, wie locker anhaftende Etikettenreste, Reste von Aluminium-Folien oder Deckeln von den Schnitzel zu entfernen und Klebstoffreste abzuwaschen. Die Betriebstemperatur im Rührbehälter 56 liegt ebenfalls zwischen 63 und 65°C. Auch der Rührbehälter 56 kann einen mit einem Unterdruck beaufschlagbaren Brüdenraum (nicht dargestellt) auf weisen, um mit Geruchsstoffe versetzten Lösemitteldämpfe abzuziehen.

Die im Rührbehälter 56 nachgereinigten Schnitzel werden mittels einer weiteren Förderschnecke 60 in einen Zentrifugalabscheider 62 gefördert, in dem ein Teil des Lösemittels mechanisch von den Schnitzeln getrennt wird. Nach der mechanischen Abtrennung des Lösemittels im Zentrifugalabscheider 62 besitzen die Schnitzel noch einen Lösemittelgehalt von etwa 20 bis 25 %. Das verbrauchte, mit Verunreinigungen belastete Lösemittel wird bei 64 aus dem Zentrifugalabscheider 62 abgezogen und zu der Förderschnecke 30 geleitet, um es dort zur Vorreinigung der Schnitzel zu nutzen, wie durch 66 in Fig. 1 dargestellt.

Nach der mechanischen Abtrennung von Lösemittel folgt eine zweistufige thermische Abtrennung oder Desolventierung, wie bei 68 in Fig. 2 dargestellt. Die Desolventierung wird zum einen in einer Trocknervorlage 70 eines Vakuumtrockners 72 und zum anderen im Vakuumtrockner 72 selbst durchgeführt.

In der ersten Desolventierungsstufe werden die Schnitzel im Inneren der geschlossenen Trocknervorlage 70 mit heißem Stickstoff durchspült, der in einem Kreislauf 74 durch die Trocknervorlage 70 geleitet wird, um die Schnitzel aufzuheizen und das oberflächlich anhaftende Lösemittel auszutreiben. Das ausgetriebene Lösemittel wird zusammen mit dem Stickstoff in einem Kondensator 76 des Stickstoff-Kreislaufs 74 außerhalb der Trocknervorlage 70 kondensiert und in den Lösemittelkreislauf zurückgeführt, wie bei 78 in Fig. 2 dargestellt, während der Stickstoff im Kreislauf 74 mit einer Heizung 80 erneut erhitzt und in die Trocknervorlage 70 zurück geleitet wird.

In der zweiten Desolventierungsstufe werden die Schnitzel im Vakuumtrockner 72 bei einer Temperatur von etwa 115 bis 120°C, d.h. nahe der Glastemperatur der Polyolefine, und einem Druck von weniger als 20 mbar vakuumgetrocknet. Die Verweilzeit im Vakuumtrockner 72 beträgt etwa 180 bis 240 Minuten, wobei die Schnitzel ständig in Bewegung gehalten werden. Die Beheizung des Trockners 72 erfolgt zum einen durch eine Heizung (nicht dargestellt) in einer wärmeisolierten Doppelwand 82 des Trockners 72 sowie zum anderen mittels eines Stroms von heißem Stickstoff, der als Schleppgas in einem Kreislauf 84 mit einer geringen Strömungsmenge durch den Trockner 72 umgewälzt wird, um die Lösemitteldämpfe zusammen mit eventuell verbliebenen Geruchsstoffen aus dem Trockner 72 abzuführen. Das verdampfte Lösemittel wird zusammen mit dem Schleppgasstrom durch einen Kondensator 86 außerhalb des Vakuumtrockners 72 geleitet, um das Lösemittel zu kondensieren und vom Schleppgas zu trennen, das anschließend in einem Wärmetauscher 88 erneut aufgeheizt und in den Vakuumtrockner 72 zurückgeführt wird. Das kondensierte Lösemittel wird in den Lösemittelkreislauf zurückgeführt, wie in Fig. 2 bei 90 dargestellt.

Am Ausgang des Vakuumtrockners 72 befindet sich eine gasdichte Zellenradschleuse 92, die den Übergang vom geschlossenen explosionsgeschützten ersten Anlagenteil 12, dessen Komponenten aus Gründen des Explosionsschutzes über ein Stickstoff-Pendelgas-System (nicht dargestellt) miteinander verbunden sind, zum nachfolgenden offenen Anlagenteil 14 sichert. Durch die gasdichte Zellenradschleuse 92 werden die praktisch lösemittelfreien und geruchsneutralen Schnitzel zur Zwischenlagerung in ein Silo 94 ausgetragen. Der Lösemittelgehalt der äußerlich und innerlich gereinigten Schnitzel im Silo 94 beträgt weniger als 10 ppm/kg.

Da die Schnitzel jedoch noch mit Begleitstoffe durchmischt sind, wie abgelösten Etikettenresten, Resten von Aluminium-Folien oder Deckeln, sowie der Feinkornfraktion, werden diese letzteren im nachfolgenden zweiten Anlagenteil 14, der hinsichtlich Explosionsschutz keinen Anforderungen unterliegt, von den gemischten Kunststoff-Schnitzeln getrennt, wie in Fig. 2 bei 96 und 98 dargestellt, bevor die Schnitzel selbst in sortenreine Kunststoff-Recyclate getrennt werden, wie in Fig. 2 bei 100 dargestellt.

Die Trennung umfasst eine mechanischen Klassierung, bei der die Schnitzel zuerst mit Hilfe eines oder mehrerer Siebe 102 gesiebt werden, um die Feinkornfraktion 104 abzutrennen und dadurch bei einer nachfolgenden Sichtung in einem Windsichter 106 zur Abtrennung flächiger Begleitstoffe 108, wie Etikettenreste und dünne Folienschnitzel, die Trennschärfe der Flugfraktion zu verbessern. Die Windsichtung kann ein- oder zweistufig ausgeführt werden, wobei im zuletzt genannten Fall als zweite Sichterstufe ein ballistischer Sichter eingesetzt werden kann.

Zur Abtrennung der Reste von Aluminium-Folien oder Deckeln 110 werden die Schnitzel anschließend einem Wirbelstromabscheider 112 zugeführt, in dem diese Begleitstoffe abgeschieden werden, wie in Fig. 2 bei 98 dargestellt. Die nach der Siebung, Sichtung und Wirbelstromabscheidung vorliegenden, äußerlich und innerlich gereinigten, trockenen, praktisch lösemittelfreien und geruchsneutralen Schnitzel aus PE, PP und PET ohne andere Begleitstoffe werden dann zur sortenreinen Trennung in einer Trennvorlage 114 zwischengelagert. Die abgeschiedenen Aluminium-Reste können einer Verhüttung zugeführt werden.

Für die Trennung der Schnitzel in die einzelnen sortenreinen Kunststoff-Recyclate aus PE, PP und PET werden vollautomatisch arbeitende Sortiereinheiten mit Nah-Infrarot-Detektoren (NIR) 116 und rechnergesteuerten Druckluftdüsen eingesetzt, von denen mindestens zwei, in der Regel drei in Reihe hintereinander angeordnet sind, so dass Sortenreinheiten von mehr als 98 % erzielt werden können.

Nach der Trennung der Schnitzel in die drei sortenreinen Kunststoff-Recyclate PE, PP und PET, wie in Fig. 1 dargestellt, werden die PE- und PP-Recyclate jeweils einer Farbseparation unterzogen, bei der sie mittels hochauflösender CCD-Kameras 118 in farblich hochreine Fraktionen getrennt werden, wie in Fig. 2 bei 120 dargestellt. Anschließend werden diese Fraktionen einer Nachstabilisierung mit Verarbeitungs- und UV-Stabilisatoren sowie einer Regranulierung unterzogen, wie bei 122 und 124 dargestellt, bevor sie in einem Extruder 126 extrudiert oder auf andere Weise verarbeitet werden.

Das Polyethylenterephthalat-Recyclat wird nach der Trennung von den Polyolefin-Recyclaten über eine Reaktorvorlage 126 zur Nachkondensation 134 in einen Reaktor 128 gefördert, wo unter ständigem Umwälzen der Schnitzel bei einer Temperatur zwischen 180 und 190°C, einem Druck von 5 bis 10 mbar und einer Verweilzeit von etwa 60 Minuten mittels einer Schlepp-Inertgas-Vakuumtechnik eine gewünschte intrinsische Viskosität und ein gewünschter Acetaldehydgehalt eingestellt werden, die von entscheidender Bedeutung für die Produktqualität des Recyclats sind.

Danach wird mittels hochauflösender CCD-Kameras 118 ebenfalls eine NIR-Farbseparation des Polyethylenterephthalat-Recyclats vorgenommen, wie zuvor für die Polyolefin-Recyclate beschrieben.

Mit dem beschriebenen Verfahren und der beschriebenen Anlage ist eine werkstoffliche Verwertung von Kunststoffabfällen aus Haushalten und Gewerbe möglich, wobei hochwertige Recyclate oder Sekundärrohstoffe erzeugt werden können, die oberflächlich und innerlich gereinigt, lösemittelfrei, geruchsneutral, sortenrein und nach Farben getrennt sind und weder Feingut noch artfremde Begleitstoffe aus anderen Kunststoffen oder Nichtkunststoffen enthalten, so dass sie uneingeschränkt zur Herstellung beliebiger Kunststoffartikel eingesetzt werden können.

Vorteilhaft bei dem zuvor beschriebenen Verfahren ist darüber hinaus, dass bei sämtlichen Verfahrensschritten kein Wasser verwendet wird, dass das Lösemittel sowie das Inertgas getrennt aufbereitet und im Kreislauf gefahren werden können, und dass das Lösemittel und das Inertgas im Gegenstrom zum Materialstrom geführt werden können. Überschüssiges, mit Lösemittelresten beladenes Inertgas kann in einer Abluftreinigungsanlage 130 (Fig. 2) thermisch genutzt werden.

Außerdem ist der bei der Lösemittelaufbereitung anfallende Prozessrückstand lösemittelfrei und kann daher als nicht überwachungspflichtiger gewerblicher Siedlungsabfall einer thermischen Verwertung zugeführt werden, wie bei 42 in Fig. 2 dargestellt. Die an die Atmosphäre emittierte Abluft erfüllt die Anforderungen an die TA-Luft.

## Patentansprüche

1. Verfahren zur Rückgewinnung von Kunststoff-Recyclaten aus zerkleinerten Kunststoffabfällen, die Polyolefine und Polyethylenterephthalat enthalten, **dadurch gekennzeichnet, dass** die Kunststoffabfälle vor einer Trennung in sortenreine Kunststoff-Recyclate mit einem organischen Lösemittel behandelt werden.

2. Verfahren nach Anspruch 1, **dadurch gekennzeichnet, dass** das Lösemittel ein von Wasser und Fluorkohlenwasserstoffen freies aliphatisches Lösemittel ohne aromatische Bestandteile ist.

3. Verfahren nach Anspruch 1 oder 2, **dadurch gekennzeichnet, dass** das Lösemittel ein Alkan, ein Alkohol oder ein Essigsäureester ist, das/der durch alkalische Verunreinigungen in den Kunststoffabfällen nicht hydrolysierbar ist.

4. Verfahren nach einem der vorangehenden Ansprüche, **dadurch gekennzeichnet, dass** das Lösemittel n-Hexan, Iso-Propanol, n-Butanol oder Iso-Propylacetat oder n-Butylacetat ist.

5. Verfahren nach einem der vorangehenden Ansprüche, **dadurch gekennzeichnet, dass** bei der Behandlung Oberflächen der unsortierten Kunststoffabfälle mit unter Druck stehendem erwärmtem Lösemittel besprüht werden.

6. Verfahren nach einem der vorangehenden Ansprüche, **dadurch gekennzeichnet, dass** bei der Behandlung Schüttungen der unsortierten Kunststoffabfälle mit erwärmtem Lösemittel gespült werden.

7. Verfahren nach einem der vorangehenden Ansprüche, **dadurch gekennzeichnet, dass** bei der Behandlung die unsortierten Kunststoffabfälle in einem mit dem Lösemittel gefüllten Behälter (56) in Bewegung versetzt werden.

8. Verfahren nach einem der vorangehenden Ansprüche, **dadurch gekennzeichnet, dass** die unsortierten Kunststoffabfälle zuerst mit dem Lösemittel besprüht, dann mit dem Lösemittel gespült und dann in dem mit dem Lösemittel gefüllten Behälter (56) in Bewegung versetzt werden.

9. Verfahren nach einem der vorangehenden Ansprüche, **dadurch gekennzeichnet, dass** die unsortierten Kunststoffabfälle nach der Behandlung mit dem Lösemittel mechanisch und/oder thermisch vom Lösemittel getrennt werden.

10. Verfahren nach Anspruch 9, **dadurch gekennzeichnet, dass** die unsortierten Kunststoffabfälle bei der thermischen Trennung auf eine Temperatur von etwa 115 bis 120°C erwärmt und einem Druck von weniger als 30 mbar ausgesetzt werden.

11. Verfahren nach Anspruch 9 oder 10, **dadurch gekennzeichnet, dass** die unsortierten Kunststoffabfälle nach der mechanischen und/oder thermischen Trennung einer Klassierung, einer Sichtung und/oder einer Wirbelstromabscheidung unterzogen werden.

12. Anlage zur Rückgewinnung von Kunststoff-Recyclaten aus zerkleinerten Kunststoffabfällen, die Polyolefine und Polyethylenterephthalat enthalten, **gekennzeichnet durch** Einrichtungen (30, 46, 56) zur Behandlung der Kunststoffabfälle mit einem organischen Lösemittel, Einrichtungen (62, 70, 72) zur Abtrennung des organischen Lösemittels nach der Behandlung, Einrichtungen (102, 106, 112) zur Abtrennung von unerwünschten Begleitstoffen nach der Abtrennung des Lösemittels, sowie Einrichtungen (116) zur Trennung der Kunststoffabfälle in sortenreine Kunststoff-Recyclate nach der Abtrennung der unerwünschten Begleitstoffe.
